(19) Europäisches Patentamt
European Patent Office
Office européen des brevets

(11) **EP 3 641 039 B1**

(12) **EUROPEAN PATENT SPECIFICATION**

(45) Date of publication and mention
of the grant of the patent:
**20.07.2022 Bulletin 2022/29**

(21) Application number: **19202680.5**

(22) Date of filing: **11.10.2019**

(51) International Patent Classification (IPC):
*H01M 8/1213* (2016.01)    *H01M 8/1246* (2016.01)
*H01M 4/86* (2006.01)    *H01M 4/90* (2006.01)

(52) Cooperative Patent Classification (CPC):
**H01M 8/1213; H01M 4/8621; H01M 4/8663;**
**H01M 4/9066; H01M 8/1246;** H01M 2008/1293;
H01M 2300/0074; Y02E 60/50; Y02P 70/50

(54) **MEMBRANE ELECTRODE ASSEMBLY AND FUEL CELL**

MEMBRANELEKTRODENANORDNUNG UND BRENNSTOFFZELLE

ENSEMBLE DE MEMBRANE-ÉLECTRODE ET PILE À COMBUSTIBLE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **18.10.2018 JP 2018196906**

(43) Date of publication of application:
**22.04.2020 Bulletin 2020/17**

(73) Proprietor: **Panasonic Intellectual Property**
**Management Co., Ltd.**
**Osaka-shi, Osaka 540-6207 (JP)**

(72) Inventors:
• **TAKEUCHI, Kaori**
**Osaka-shi, Osaka 540-6207 (JP)**
• **MURASE, Hideaki**
**Osaka-shi, Osaka 540-6207 (JP)**
• **NUNOO, Kosuke**
**Osaka-shi, Osaka 540-6207 (JP)**
• **KUROHA, Tomohiro**
**Osaka-shi, Osaka 540-6207 (JP)**

(74) Representative: **Grünecker Patent- und**
**Rechtsanwälte**
**PartG mbB**
**Leopoldstraße 4**
**80802 München (DE)**

(56) References cited:
**US-A1- 2016 204 446    US-A1- 2019 006 680**

• **LEI BI ET AL: "BaZr0.8Y0.2O3-[delta]-NiO**
**Composite Anodic Powders for**
**Proton-Conducting SOFCs Prepared by a**
**Combustion Method", JOURNAL OF THE**
**ELECTROCHEMICAL SOCIETY, vol. 158, no. 7, 1**
**January 2011 (2011-01-01), pages B797-B803,**
**XP055248412, US ISSN: 0013-4651, DOI:**
**10.1149/1.3591040**
• **YU-EUN PARK ET AL: "Pore structure**
**improvement in cermet for anode-supported**
**protonic ceramic fuel cells", CERAMICS**
**INTERNATIONAL., vol. 39, no. 3, 1 April 2013**
**(2013-04-01), pages 2581-2587, XP055403544, NL**
**ISSN: 0272-8842, DOI:**
**10.1016/j.ceramint.2012.09.020**

**Description**

BACKGROUND

1. Technical Field

The present disclosure relates to a membrane electrode assembly for an electrochemical device and a fuel cell including the membrane electrode assembly.

2. Description of the Related Art

As an electrochemical device using a solid oxide electrolyte material, a solid oxide fuel cell is known, for example. For electrolyte materials of a solid oxide fuel cell, oxide ion-conducting electrolyte materials, typified by stabilized zirconia, are commonly and widely used. In a solid oxide fuel cell using an oxide ion-conducting electrolyte material, ionic conductivity decreases as the temperature decreases. Accordingly, a solid oxide fuel cell using an oxide ion-conducting electrolyte material requires an operating temperature of 700°C or higher.

Meanwhile, a solid oxide fuel cell using a proton-conducting electrolyte material is operative at 600°C. Accordingly, in view of lower costs and chemical stability of structural members, a solid oxide fuel cell using a proton-conducting electrolyte material has been drawing attention in recent years.

The cell shape of a solid oxide fuel cell is known to be broadly classified into a tubular type and a flat type. In a tubular type, however, resistance loss is large due to the long current path. For this reason, to obtain higher output, the development of a flat type is under way.

However, a flat type is readily susceptible to cell breakage and cracking compared with a tubular type, and thus has a problem of being inferior to a tubular type in view of strength. Cell breakage and cracking are primarily attributed to "warpage of a planar cell" and "thermal stress arising at the interface between the electrolyte and the electrode". The main factor that causes these phenomena is a difference in linear expansion coefficient between the electrolyte and the electrode. To address this, the constitution in which breakage and cracking are suppressed by decreasing a difference in linear expansion coefficient between the electrolyte and the electrode has been proposed (International Publication No. 2017-014069, for example).

International Publication No. 2017-014069 adopts a two-layer structure consisting of a first anode layer and a second anode layer for its electrode. Consequently, it is possible to decrease a difference in linear expansion coefficient between a solid electrolyte layer and an electrode that is in contact with the solid electrolyte layer and to suppress breakage of a planar cell during sintering. Publications US2019/006680A1 and US2016/204446A1, as well as scientific articles "BaZr0.8Y0.2O3-[delta]-NiO Composite Anodic Powders for Proton-Conducting SOFCs Prepared by a Combustion Method" by Lei Bi et al., published in JOURNAL OF THE ELECTROCHEMICAL SOCIETY, vol. 158, no. 7, 1 January 2011 (2011-01-01), pages B797-B803 and "Pore structure improvement in cermet for anode-supported protonic ceramic fuel cells" by Yu-Eun Park et al., published in CERAMICS INTERNATIONAL., vol. 39, no. 3, 1 April 2013 (2013-04-01), pages 2581-2587, disclose electrode layers based on proton-conductive electrolytes for solid oxide fuel cells.

SUMMARY

However, the durability of a membrane electrode assembly for an electrochemical device had not been fully investigated previously.

One non-limiting and exemplary embodiment provides a membrane electrode assembly with enhanced reliability and a fuel cell.

A membrane electrode assembly according to the invention is defined in claim 1.

The present disclosure is constituted as described above and exerts an effect of achieving enhanced reliability.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

BRIEF DESCRIPTION OF THE DRAWINGS

Fig. 1 schematically illustrates the configuration of a membrane electrode assembly included in an electrochemical device according to Embodiment 1;

Fig. 2 schematically illustrates the configuration of a membrane electrode assembly included in an electrochemical device according to Modification 1 of Embodiment 1;

Fig. 3 schematically illustrates the configuration of a membrane electrode assembly included in an electrochemical device according to Modification 2 of Embodiment 1;

Fig. 4 is a block diagram schematically illustrating an exemplary core configuration of a fuel cell according to Embodiment 2;

Fig. 5 is a cross-sectional view schematically illustrating an exemplary configuration of a single cell included in the fuel cell according to Embodiment 2;

Fig. 6 is a perspective view schematically illustrating a measurement method for mechanical properties evaluation of an electrode material according to a working example;

Fig. 7 is a cross-sectional view schematically illustrating the measurement method for mechanical properties evaluation of the electrode material according to the working example;

Fig. 8 is a graph showing an exemplary stress-strain curve according to the working example; and

Fig. 9 is a graph showing stress-strain curves for electrode materials according to Examples and a Comparative Example.

DETAILED DESCRIPTION

Underlying Findings for Embodiments of the Present Disclosure

An electrolyte layer of a solid oxide fuel cell has conventionally been oxide ion-conducting yttria-stabilized zirconia (hereinafter, referred to as "YSZ"), which is known to have high strength and high toughness at an operating temperature. In such a solid oxide fuel cell, an electrode (fuel electrode, for example) is including a composite material consisting of YSZ and Ni, and the volume ratio is approximately 50:50.

Meanwhile, barium zirconate-based oxides, barium and cerium-based oxides, and lanthanum gallate-based oxides are used for proton-conducting electrolyte layers, but the strength is inferior to YSZ.

The present inventors found that when an electrode is including a composite material consisting of a metal (Ni, for example) and an electrolyte material that is inferior in strength to YSZ, deforming characteristics are exhibited in the tensile direction by increasing a volume ratio of the metal in the electrode. On the basis of this finding, it is possible to decrease, in the operating environment, the occurrence of warpage arising from a difference between the linear expansion coefficient of the electrolyte layer and the linear expansion coefficient of the electrode as well as the occurrence of cracking due to thermal stress. The operating environment of a cell herein includes a temperature rising process to an operating temperature, a reduction process, and a fastened state by a current collector, for example.

Meanwhile, as a measure against breakage and cracking of a planar cell due to warpage arising during sintering, International Publication No. 2017-014069 proposes a configuration in which between a solid electrolyte layer and a first anode layer, a second anode layer having an intermediate linear expansion coefficient between those of the solid electrolyte layer and the first anode layer is interposed. More specifically, a second anode layer containing an ion-conducting metal oxide M3 and nickel oxide is included between a solid electrolyte layer containing an ion-conducting metal oxide M1 and a first anode layer containing an ion-conducting metal oxide M2 and nickel oxide. In this configuration, a volume content Cn1 of nickel oxide in the first anode layer and a volume content Cn2 of nickel oxide in the second anode layer satisfy a relationship of Cn1 < Cn2, and Cn1 is 40% by volume to 80% by volume and Cn2 is 50% by volume to 90% by volume.

By adopting the above-described configuration, in International Publication No. 2017-014069, a difference in linear expansion coefficient between the solid electrolyte layer and the anode layer is decreased, thereby suppressing breakage and cracking of a cell during sintering.

However, the present inventors found that decreased thermal stress at an interface between dissimilar materials and decreased warpage during sintering of a cell (i.e., before operation) are solely investigated in International Publication No. 2017-014069, and warpage, thermal stress, and the like in the actual operating environment of a cell (reduction process, for example) are not fully investigated.

For this reason, the present inventors investigated in detail the mechanical properties of an electrode in a reducing atmosphere as well as under temperature conditions in the operating environment, and obtained the findings below by calculating the amount of deflection for a planar cell (i.e., membrane electrode assembly). Deflection herein means deformation of a planar cell in the rotation direction. Specifically, when a load is applied to the center of a diskshaped planar cell in the vertical direction, the planar cell deforms in the loading direction. At this moment, the amount of changes of the planar cell in the vertical direction is regarded as the amount of deflection.

First, breakage and cracking of a planar cell in the operating environment are considered to arise due to the following factors. Specifically, the amount of warpage of an electrode increases due to exposure of the planar cell to a reducing atmosphere as well as due to temperature conditions in the operating environment. When the amount of warpage of the electrode increases like this, it is considered that a contact area between the electrode and a current collector or the like in the cell decreases to form a portion to which excessive stress is applied, thereby causing breakage and cracking of the cell.

To address this, the present inventors intensively studied membrane electrode assemblies in the operating environment. As a result, the present inventors found that breakage and cracking of a planar cell can be suppressed by imparting ductile properties to an electrode (fuel electrode, for example) to increase the amount of strain. In addition, it was found that thermal stress arising at an interface between dissimilar materials, in other words, an interface between an electrolyte layer and an electrode can also be decreased by imparting ductile properties to the electrode.

In other words, warpage arising in a membrane electrode assembly of a planar cell in a temperature rising process during operation is caused by a difference in linear expansion coefficient between bonded dissimilar materials. A linear expansion coefficient herein corresponds to a linear expansion coefficient ($K^{-1}$) in accordance with the measuring method of thermal expansion of fine ceramics by thermomechanical analysis in JIS R 1618.

For example, the linear expansion coefficients of ceramic materials, such as YSZ, lanthanum gallate-based oxides, barium zirconate-based oxides, and barium and cerium-based oxides, used for an electrolyte layer are as small as $8 \times 10^{-6}/°C$ to $11 \times 10^{-6}/°C$.

In contrast, the linear expansion coefficients of metals, such as Ni, Fe, Co, and Pd, contained in a composite material that forms an electrode are as large as $11 \times 10^{-6}/°C$ to $20 \times 10^{-6}/°C$. In addition, oxides of these metals also have linear thermal expansion coefficients of about $10 \times 10^{-6}/°C$ to $20 \times 10^{-6}/°C$ larger than the above-mentioned ceramic materials. For example, the linear expansion coefficient of NiO is about $14 \times 10^{-6}/°C$.

Accordingly, the linear expansion coefficient of an electrode including a metal or a composite material of a metal and a metal oxide is larger than the linear expansion coefficient of an electrolyte layer (solid electrolyte membrane, for example).

Such a composite material consisting of a metal and ceramics can be prepared by sintering a mixture of ceramics and a metal oxide of Ni, Fe, Co, Pd, and the like, followed by reduction processing of the metal oxide. In a temperature rising process in which a solvent, a binder, a plasticizer, and the like are vaporized for sintering during preparation of a cell, the shape of a planar cell remains unchanged and flat in the sintering temperature range. However, the electrode with a larger linear expansion coefficient undergoes a large volume change as the temperature decreases from the sintered state. Consequently, the electrode curves toward the electrolyte layer side. This means that the planar cell curves upward (i.e., electrolyte side) or in a convex shape when the electrode is disposed on the lower side.

Regarding warpage of an electrode of a membrane electrode assembly that arises during such sintering, International Publication No. 2017-014069 proposes the constitution in which breakage of a cell during sintering is suppressed by adopting a two-layer structure consisting of a first anode layer and a second anode layer for an electrode, thereby decreasing a difference in linear expansion coefficient between the electrolyte layer and the electrode.

However, even if warpage of a membrane electrode assembly can be suppressed during sintering by adopting the configuration as in International Publication No. 2017-014069, the amount of warpage of the membrane electrode assembly increases in some cases in the reduction process, for example. Specifically, in the reduction process, the amount of warpage of an electrode increases in some cases, for example, due to a decreased Young's modulus of the electrode after reduction of NiO as well as due to volume shrinkage through reduction of NiO.

Accordingly, when a cell is fabricated for a fuel cell by fastening a current collector and a membrane electrode assembly, warpage of the membrane electrode assembly increases in the reduction process, thereby decreasing a contact area between the current collector and the electrode. Consequently, a portion to which excessive stress is applied is formed in the membrane electrode assembly, and cracking and breakage result.

Meanwhile, the present inventors found that breakage and cracking of a membrane electrode assembly can be suppressed by imparting ductile properties to a composite material that forms an electrode of the membrane electrode assembly, for example, by increasing a volume ratio of a metal, such as Ni, thereby controlling the membrane electrode assembly to remain flat during operation.

In other words, to control the membrane electrode assembly to remain flat in the operating environment, tensile stress arising on the electrode side opposite to the side in contact with the electrolyte layer needs to be deceased. In such a case, if the electrode is hard and has difficult-to-deform characteristics, breakage of the electrode occurs before the electrode deforms to become flat. The present inventors thus presumed that breakage can be suppressed by imparting characteristics that enable the electrode to deform in the tensile direction to become flat.

However, when a volume ratio of a metal, such as Ni, is increased in the electrode, a difference in linear expansion coefficient between the electrolyte layer and the electrode increases. This causes concern that detachment at an interface between the electrolyte layer and the electrode may result due to increased thermal stress.

Meanwhile, the present inventors found that by increasing a volume ratio of a metal in the electrode, ductile properties are imparted to the electrode, thereby achieving decreased thermal stress. This means that by imparting ductile properties, deformation is possible with further small stress.

An membrane electrode assembly according to a first aspect of the present disclosure includes: an electrode including a composite material containing a metal and a proton-conducting first electrolyte; and an electrolyte layer including a proton-conducting second electrolyte, where the electrode and the electrolyte layer are stacked, and a volume ratio of the metal in the electrode is 57% or more.

The volume ratio of a metal in the electrode herein represents a volume ratio of a metal in the solid portion excluding void portions, such as pores, within the electrode. In the operating environment of the membrane electrode assembly, tensile stress acts on the electrode in a direction that decreases warpage due to the fastened state.

Here, when the first electrolyte and the second electrolyte are proton-conducting electrolytes, and if stress is applied, during operation, to the membrane electrode assembly in which an electrode and an electrolyte layer are stacked, the electrode cannot adapt to the shape change and breakage may arise.

According to the above constitution, since a volume ratio of the metal is 57% or more, the electrode can deform in the tensile direction to prevent breakage. Consequently, it is possible to decrease the occurrence of breakage and cracking during operation due to local stress arising from warpage caused by a difference in linear expansion coefficient between the electrolyte layer and the electrode as well as due to thermal stress at an interface between these dissimilar materials.

As described above, the membrane electrode assembly according to the first aspect of the present disclosure exerts an effect of achieving enhanced reliability.

The volume ratio of the metal is preferably 57% or more and less than 100%.

An electrode (fuel electrode, for example) that has a volume ratio of a metal material of 57% or more and thus has ductile properties can change the shape until a cell becomes flat in the operating environment. This results in suppressed breakage.

Meanwhile, when the above-described membrane electrode assembly is used for a fuel cell, for example, the following problems arise. Specifically, when a volume ratio of a metal material increases in the electrode, breakage resulting from re-oxidation of the metal material during a start/stop cycle as well as a decreased porosity due to grain growth of the metal material during continuous power generation may possibly arise. Accordingly, it is preferable to contain an electrolyte material, even in a small amount. Less than 100% herein means, for example, 99% or less or 95% or less. By setting to these values, an effect of suppressed deterioration can be expected.

In a membrane electrode assembly according to a second aspect of the present disclosure, when an amount of warpage is defined as $\Delta L/L$ in which $\Delta L$ is an in-plane difference in height in the thickness direction and $L$ is a size in a longitudinal direction of a membrane electrode assembly after sintering, the electrode in the above-described first aspect may be designed to deform at a $\Delta L/L$ of 0.5% or more in a direction that decreases warpage.

Herein, the amount of warpage means the amount of displacement when the electrode curves in the thickness direction due to warpage, and the direction that decreases warpage refers to a direction opposite to the direction toward which the electrode curves. In the operating environment of the membrane electrode assembly, tensile stress acts on the electrode in a direction that decreases warpage due to the fastened state.

Here, when the first electrolyte and the second electrolyte are proton-conducting electrolytes, and if stress is applied, during operation, to the membrane electrode assembly in which an electrode and an electrolyte layer are stacked, the electrode cannot adapt to the shape change and breakage may arise.

According to the above-described constitution, since the electrode deforms at a $\Delta L/L$ of 0.5% or more in a direction that decreases warpage, the electrode can deform in the tensile direction to prevent breakage. Consequently, it is possible to decrease the occurrence of breakage and cracking during operation due to local stress arising from warpage caused by a difference in linear expansion coefficient between the electrolyte layer and the electrode as well as due to thermal stress at an interface between these dissimilar materials.

As described above, the membrane electrode assembly according to the second aspect of the present disclosure exerts an effect of achieving enhanced reliability.

In a membrane electrode assembly according to a third aspect of the present disclosure, the volume ratio of the metal in the electrode in the above-described first and second aspects may be 69% or more and 84% or less.

According to the above-described constitution, since the volume ratio of the metal is 69% or more and 84% or less, the electrode exerts an effect of achieving enhanced reliability

In a membrane electrode assembly according to a fourth aspect of the present disclosure, the metal in any one aspect of the above-described first to third aspects may be composed of at least one metal selected from the group consisting of Ni, Co, Fe, and Pd.

According to the above-described constitution, the metal includes at least one metal selected from the group consisting of Ni, Co, Fe, and Pd. Here, the respective melting points of Ni, Co, Fe, and Pd are close to each other at about 1,450°C to 1,550°C. Accordingly, Ni, Co, Fe, and Pd each exhibit similar ductile behavior at an operating temperature of 600°C to 700°C, which is lower than their melting points.

As described above, breakage can be suppressed by using at least one metal selected from the above-described metal group.

In a membrane electrode assembly according to a fifth aspect of the present disclosure, a porosity of the electrode in any one aspect of the above-mentioned first to fourth aspects may be 20% or more and 50% or less.

According to the above-described constitution, when the electrode is used as an electrode on the fuel electrode side, it is possible to ensure a diffusion path of a hydrogen-containing gas, thereby promoting reactions. Moreover, regarding the mechanical properties of the membrane electrode assembly, Young's modulus can be lowered, thereby further facilitating deformation.

The porosity herein represents a volume ratio of voids within the electrode. The porosity can be derived from Archimedes method or from an area ratio of void portions on a cross-sectional SEM image.

In the membrane electrode assembly according to the first aspect of the present disclosure, each of the first electrolyte and the second electrolyte in any one aspect of the above-mentioned first to fifth aspects is represented by any one compositional formula of $Ba_aZr_{1-x}M_xO_3$, $Ba_aCe_{1-x}M_xO_3$, and $Ba_aZr_{1-x-y}Ce_xM_yO_3$, where $0 < x < 1$; $0 < y < 1$; $0.95 \leq a \leq 1.05$).

In a membrane electrode assembly according to a sixth aspect of the present disclosure, each of the first electrolyte and the second electrolyte in the above-mentioned sixth aspect may be represented by $Ba_aZr_{1-x}M_xO_3$.

In the membrane electrode assembly according to the first aspect, M is at least one element selected from the group consisting of Sc, Lu, Yb, and Tm.

Here, when the electrode contains $Ba_aZr_{1-x}M_xO_3$ as the first electrolyte and Ni, $BaNiM_2O_5$ is typically formed through chemical reactions between these components. Further, the formed $BaNiM_2O_5$ decomposes through reactions, for example, with $CO_2$ in a hydrogen-containing gas that is supplied to the fuel electrode, thereby impairing stability.

However, stability of the electrode can be enhanced when the first electrolyte contained in the electrode is at least either compound of: a first compound represented by a compositional formula of $Ba_aZr_{1-x1}M_{x1}O_3$ where M is one or more elements ($0 < x_1 < 1$) selected from trivalent elements of Sc, Lu, and Yb having an ionic radius of more than 0.072 nm and less than 0.088 nm; and a second compound represented by a compositional formula of $BaZr_{1-x2}Tm_{x2}O_3$ ($0 < x_2 < 0.3$).

This is presumably because when the first electrolyte is at least either compound of the first compound and the second compound, it is possible to suppress reactions between Ni and the first electrolyte contained in the electrode, thereby preventing formation of $BaNiM_2O_5$ and/or $BaNiTm_2O_5$ that decompose through reactions with $CO_2$.

The problem about stability against $CO_2$ similarly arises in chemical reactions between the second electrolyte contained in the electrolyte layer and Ni contained in the electrode. However, by employing at least either compound of the above-mentioned first compound and the second compound for the second electrolyte, it is possible to prevent formation of $BaNiM_2O_5$ and/or $BaNiTm_2O_5$ that decompose through reactions with $CO_2$.

According to the present invention, M contained in the first electrolyte and the second electrolyte is at least one element selected from the group consisting of Sc, Lu, Yb, and Tm. Consequently, it is possible to suppress reactivity of the first electrolyte and the second electrolyte, thereby achieving excellent stability against $CO_2$.

In a membrane electrode assembly according to a ninth aspect of the present disclosure, a thickness of the electrode in any one aspect of the above-mentioned first to eighth aspects may be designed to be larger than a thickness of the electrolyte layer.

Here, mechanical properties of a membrane electrode assembly are predominantly affected by the characteristics of a layer with a larger thickness.

According to the above-described constitution, since the thickness of the electrode is larger than the thickness of the electrolyte layer, ductile effects of the electrode have a large impact on the membrane electrode assembly. Consequently, breakage of the membrane electrode assembly can be suppressed.

A membrane electrode assembly according to a tenth aspect of the present disclosure, in any one aspect of the above-mentioned first to ninth aspects, may further comprise a functional layer that is provided between the electrode and the electrolyte layer to come into contact with the electrolyte layer and that has power generation performance higher than the electrode at an interface with the electrolyte layer.

Here, reactions involved in power generation primarily occur near the interface with the electrolyte layer.

According to the above-described constitution, the functional layer is provided between the electrolyte layer and the electrode at a position in contact with the electrolyte layer. For this reason, in comparison between the constitution in which no functional layer is provided between the electrolyte layer and the electrode and the constitution in which a functional layer is provided between the electrolyte layer and the electrode, the latter has power generation performance higher than the former.

Here, such a functional layer may be an electrode layer that satisfies at least one selected from the group consisting of the following (i) and (ii) and that is including a composite material of a metal and a proton-conducting electrolyte. (i) An electrode layer has a volume ratio of the proton-conducting electrolyte higher than the metal, compared with the above-described electrode. (ii) An electrode layer has a porosity larger than the above-described electrode.

Moreover, the thickness of the functional layer may be a value within the range of 5 $\mu$m or more and 50 $\mu$m or less, for example.

A fuel cell according to an eleventh aspect of the present disclosure, includes: a membrane electrode assembly including an electrode including a composite material containing a metal and a proton-conducting first electrolyte; and an electrolyte layer including a proton-conducting second electrolyte, where the electrode and the electrolyte layer are stacked, and a volume ratio of the metal in the electrode is 57% or more.; an air electrode to which an oxidant gas is supplied; a fuel gas supply channel which supplies a hydrogen-containing gas as a fuel gas to the electrode; and an oxidant gas supply channel which supplies the oxidant gas to the air electrode, where: the electrolyte layer is in contact with the electrode on a first side and in contact with the air electrode on a second side opposite to the first side; and the electrode, the electrolyte layer, and the air electrode are stacked in this order.

According to the above-described constitution, since the electrode has a volume ratio of the metal of 57% or more, deforming characteristics in the tensile direction can be imparted to the electrode to prevent breakage. Consequently, it is possible to decrease the occurrence of breakage and cracking during operation due to local stress arising from warpage caused by a difference in linear expansion coefficient between the electrolyte layer and the electrode as well as due to thermal stress at an interface between these dissimilar materials.

As described above, the fuel cell according to the eleventh aspect of the present disclosure exerts an effect of achieving enhanced reliability in the operating environment.

Hereinafter, embodiments of the present disclosure will be described with reference to the attached drawings. Embodiments described hereinafter all represent an example of the above-described each aspect. Accordingly, the shapes, materials, components, arrangement positions and connection modes of the components, and the like described hereinafter are mere examples and do not limit the above-described each aspect unless otherwise recited in the claims. Moreover, among components described below, components that are not recited in an independent claim, which represents the most generic concept of the above-described each aspect, will be described as optional components. Further, description of components with the same sign in the drawings is omitted in some cases. For easy understanding, the drawings schematically illustrate each component and thus do not accurately represent the shape, dimensional ratios, and the like in some cases.

Embodiment 1

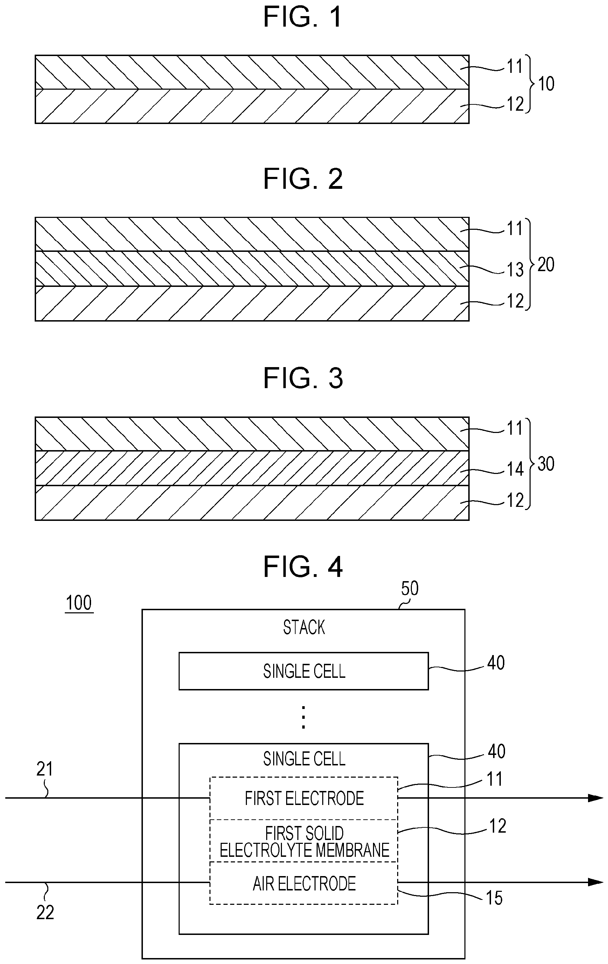

A membrane electrode assembly 10 according to Embodiment 1 of the present disclosure will be described with reference to Fig. 1. Fig. 1 schematically illustrates the configuration of the membrane electrode assembly 10 included in an electrochemical device according to Embodiment 1.

The membrane electrode assembly 10 is, for example, a member used for constituting an electrochemical device, such as a fuel cell. As illustrated in Fig. 1, the membrane electrode assembly 10 includes a first electrode 11 (electrode) and a first solid electrolyte membrane 12 (electrolyte layer) and has a structure in which the first electrode 11 and the first solid electrolyte membrane 12 are in contact. In other words, the membrane electrode assembly 10 has a structure in which the first solid electrolyte membrane 12 is in contact with the first electrode 11 on either side and these components are stacked.

The first electrode 11 is a composite material containing a metal and a proton-conducting first electrolyte. The first electrode 11 has a volume ratio of the metal of 57% or more and preferably 95% or less. Further, when the amount of warpage is defined as $\Delta L/L$ in which $\Delta L$ is an in-plane difference in height in the thickness direction and L is a size in the longitudinal direction of a membrane electrode assembly 10 after sintering, the first electrode 11 deforms at a $\Delta L/L$ of 0.5% or more in a direction that decreases warpage.

Here, the volume ratio of the metal in the first electrode 11 represents a volume ratio of the metal in the solid portion excluding void portions, such as pores, within the first electrode 11. Moreover, the amount of warpage means the amount of displacement when the first electrode curves in the thickness direction due to warpage, and the direction that decreases warpage refers to a direction opposite to the direction toward which the first electrode curves.

The metal contained in the first electrode 11 may be composed of at least one metal selected from the group consisting of Ni, Co, Fe, and Pd. Moreover, the first electrolyte may be represented by any one compositional formula of $Ba_aZr_{1-x}M_xO_3$, $Ba_aCe_{1-x}M_xO_3$, and $Ba_aZr_{1-x-y}Ce_xM_yO_3$ (M is at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu; $0 < x < 1$; $0 < y < 1$; $0.95 \leq a \leq 1.05$).

According to the present invention, M contained in the first electrolyte is at least one element selected from the group consisting of Sc, Lu, Yb, and Tm.

The metal contained in the first electrode 11 is at least one metal selected from the group consisting of Ni, Co, Fe, and Pd. Here, the respective melting points of Ni, Co, Fe, and Pd are close to each other at about 1,450°C to 1,550°C. Accordingly, Ni, Co, Fe, and Pd each can exhibit similar ductile behavior at an operating temperature of 600°C to 700°C, which is lower than their melting points.

When the first electrode contains Ni and $Ba_aZr_{1-x}M_xO_3$ as the first electrolyte, $BaNiM_2O_5$ is formed through chemical reactions between these components. Further, when the first electrode 11 is used as a fuel electrode, for

example, the formed $BaNiM_2O_5$ decomposes through reactions with $CO_2$ in a hydrogen-containing gas that is supplied to the fuel electrode. Consequently, stability deteriorates in some cases.

For this reason, in the first electrode 11, the first electrolyte may be at least either one compound of: a first compound represented by a compositional formula of $Ba_aZr_{1-x_1}M_{x_1}O_3$ where M is one or more elements ($0 < x_1 < 1$) selected from trivalent elements of Sc, Lu, and Yb having an ionic radius of more than 0.072 nm and less than 0.088 nm; and a second compound represented by a compositional formula of $BaZr_{1-x_2}Tm_{x_2}O_3$ ($0 < x_2 < 0.3$). When M is limited to certain elements as above, stability against $CO_2$ of the first electrode 11 can be enhanced.

This is presumably because when the first electrolyte is at least either compound of the first compound and the second compound, it is possible to suppress reactions between Ni and the first electrolyte (i.e., first compound and/or second compound) contained in the first electrode 11, thereby preventing formation of $BaNiM_2O_5$ and/or $BaNiTm_2O_5$ that decompose through reactions with $CO_2$.

Although the detail will be described hereinafter, since the first electrode 11 has a volume ratio of the metal of 57% or more and deforms at a $\Delta L/L$ of 0.5% or more in a direction that decreases warpage, the first electrode can deform in the tensile direction that decreases warpage to prevent breakage.

Consequently, it is possible to decrease the occurrence of breakage and cracking during operation due to local stress arising from warpage caused by a difference in linear expansion coefficient between the first electrolyte layer 12 and the first electrode 11 as well as due to thermal stress at an interface between these dissimilar materials.

In addition, the first electrode 11 is a porous body having a porosity of 20% or more and 50% or less. Accordingly, when the first electrode 11 is used as an electrode on the fuel electrode side of a fuel cell, it is possible to ensure a diffusion path of a hydrogen-containing gas, thereby promoting reactions. Moreover, regarding the mechanical properties of the membrane electrode assembly 10, Young's modulus can be lowered, thereby further facilitating deformation.

The first solid electrolyte membrane 12 is including a proton-conducting second electrolyte. The second electrolyte may be represented by any one compositional formula of $Ba_aZr_{1-x}M_xO_3$, $Ba_aCe_{1-x}M_xO_3$, and $Ba_aZr_{1-x-y}Ce_xM_yO_3$ (M is at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu; $0 < x < 1$; $0 < y < 1$; $0.95 \leq a \leq 1.05$). According to the present invention, M contained in the second electrolyte is at least one element selected from the group consisting of Sc, Lu, Yb and Tm.

Here, the compositional formula of the first electrolyte and the compositional formula of the second electrolyte may be the same or different.

There is a relationship in which the thickness of the first electrode 11 is larger than the thickness of the first solid electrolyte membrane 12. For example, the thickness of the first solid electrolyte membrane 12 may be a value within the range of 5 $\mu$m or more and 50 $\mu$m or less, and the thickness of the first electrode 11 may be a value within the range of 150 $\mu$m or more and 3 mm or less.

Here, the mechanical properties of the membrane electrode assembly 20 are predominantly affected by the characteristics of a layer with a larger thickness. As described above, since the thickness of the first electrode 11 is larger than the thickness of the first solid electrolyte membrane 12, ductile effects of the first electrode have a large impact on the membrane electrode assembly 20. Consequently, breakage of the membrane electrode assembly 20 can be suppressed. Further, to decrease ohmic resistance, the first solid electrolyte membrane 12 may be thinned as much as possible.

Further, when the electrochemical device is a solid oxide fuel cell, for example, the electrochemical device is configured to generate power by supplying a hydrogen-containing gas to either side of the first solid electrolyte membrane 12 on which the first electrode 11 is provided and by supplying an oxidant gas to the opposite side on which the first electrode 11 is not provided. Accordingly, when the electrochemical device is a solid oxide fuel cell, the first solid electrolyte membrane 12 needs to be gas-tight.

When the allowable stress of other component members is set to 100 MPa or lower and the thermal stress arising from a difference in linear expansion coefficient is 100 MPa or higher in a fuel electrode, comparable reaction force may be applied to the component members. Accordingly, a volume ratio of the metal in the first electrode 11 may be set to 69% or more. Preferably, the volume ratio of the metal in the first electrode 11 is appropriately set within the range of 57% or more in response to various conditions, such as strength, required for the first electrode 11.

Modification 1 of Embodiment 1

Next, a membrane electrode assembly 20 included in an electrochemical device according to a modification of Embodiment 1 of the present disclosure will be described with reference to Fig. 2. Fig. 2 schematically illustrates the configuration of the membrane electrode assembly 20 included in an electrochemical device according to Modification 1 of Embodiment 1.

As illustrated in Fig. 2, the membrane electrode assembly 20 according to Modification 1 of Embodiment 1 includes a first electrode 11, a second electrode 13 (i.e., functional layer), and a first solid electrolyte membrane 12. The second electrode 13 is designed to be in contact with the first electrode 11 on a first side and in contact with the first solid electrolyte membrane 12 on a second side opposite to the first side. The first electrode 11, the second electrode 13, and the first solid electrolyte membrane 12 are stacked in this order.

As described above, the membrane electrode assembly 20 according to Modification 1 of Embodiment 1 is different from the membrane electrode assembly 10 according to Embodiment 1 in that the second electrode 13 is further included between the first electrode 11 and the first solid electrolyte membrane 12 to come into contact with the first solid electrolyte membrane 12.

The first electrode 11 and the first solid electrolyte membrane 12 included in the membrane electrode assembly 20 according to Modification 1 of Embodiment 1 are thus the same as the first electrode 11 and the first solid electrolyte membrane 12, respectively, included in the membrane electrode assembly 10 according to Embodiment 1. Accordingly, the detailed description of these members will be omitted.

The second electrode 13 is a composite material containing a metal and a proton-conducting third electrolyte. The third electrolyte is represented by any one compositional formula of $Ba_aZr_{1-x}M_xO_3$, $Ba_aCe_{1-x}M_xO_3$, and $Ba_aZr_{1-x-y}Ce_xM_yO_3$ (M is at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu; $0 < x < 1$; $0 < y < 1$; $0.95 \leq a \leq 1.05$).

Moreover, M contained in the third electrolyte may be at least one element selected from the group consisting of Sc, Lu, Yb, and Tm.

The metal contained in the second electrode 13 is an electronconducting metal and includes at least one metal selected from the group consisting of Ni, Co, Fe, and Pd, for example.

The second electrode 13 may be a functional layer that has power generation performance higher than the first electrode 11 at an interface with the first solid electrolyte membrane 12. Specifically, the second electrode 13 may be an electrode layer that increases the triple phase boundary and/or an electrode layer with an enhanced porosity, relative to the first electrode 11. When the thickness of the first solid electrolyte membrane 12 is a value within the range of 5 $\mu$m or more and 50 $\mu$m or less, a total thickness of the first electrode 11 and the second electrode 13 may be a value within the range of 150 $\mu$m or more and 3 mm or less. In such a case, the thickness of the second electrode 13 is a value within the range of 5 $\mu$m or more and 50 $\mu$m or less, for example.

As described above, the second electrode 13 may be selected from an electrode layer that can increase the triple phase boundary and/or an electrode layer with an enhanced porosity, relative to the first electrode 11, and may be combined with the first electrode 11. When an electrode of the membrane electrode assembly 20 is formed by combining the first electrode 11 and the second electrode 13 with power generation performance higher than the first electrode 11, such an electrode can enhance power generation performance compared with an electrode that is including the first electrode 11 alone, provided that the thickness of these electrodes are the same. Here, to prevent breakage by imparting, to an electrode, deforming characteristics in the tensile direction that decreases warpage, the second electrode 13 may have a structure further thinned relative to the first electrode 11.

When the electrochemical device is a solid fuel cell, for example, power can be generated in the membrane electrode assembly 20 composed of the first electrode 11, the second electrode 13, and the first solid electrolyte membrane 12 by supplying a hydrogen-containing gas to the side of the electrode consisting of the first electrode 11 and the second electrode 13 and by supplying an oxidant gas to the side of the first solid electrolyte membrane 12 opposite to the side in contact with the second electrode 13.

Modification 2 of Embodiment 1

Next, a membrane electrode assembly 30 included in an electrochemical device according to Modification 2 of Embodiment 1 of the present disclosure will be described with reference to Fig. 3. Fig. 3 schematically illustrates the configuration of the membrane electrode assembly 30 included in the electrochemical device according to Modification 2 of Embodiment 1.

As illustrated in Fig. 3, the membrane electrode assembly 30 according to Modification 2 of Embodiment 1 includes a first electrode 11, a first solid electrolyte membrane 12, and a second solid electrolyte membrane 14. The second solid electrolyte membrane 14 is designed to be in contact with the first electrode 11 on a first side and in contact with the first solid electrolyte membrane 12 on a second side opposite to the first side. The first electrode 11, the second solid electrolyte membrane 14, and the first solid electrolyte membrane 12 are stacked in this order.

As described above, the membrane electrode assembly 30 according to Modification 2 of Embodiment 1 is different from the membrane electrode assembly 10 according to Embodiment 1 in that the second solid electrolyte membrane 14 is further included between the first electrode 11 and the first solid electrolyte membrane 12 to come into contact with the first electrode 11.

The first electrode 11 and the first solid electrolyte membrane 12 included in the membrane electrode assembly 30 according to Modification 2 of Embodiment 1 are thus the same as the first electrode 11 and the first solid electrolyte membrane 12, respectively, included in the membrane electrode assembly 10 according to Embodiment 1. Accordingly, the detailed description of these members will be omitted.

The second solid electrolyte membrane 14 is including an electrolyte material represented by any one compositional formula of $Ba_aZr_{1-x}M_xO_3$, $Ba_aCe_{1-x}M_xO_3$, and $Ba_aZr_{1-x-y}Ce_xM_yO_3$ (M is at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu; $0 < x < 1$; $0 < y < 1$; $0.95 \leq a \leq 1.05$).

The second solid electrolyte membrane 14 may be including an electrolyte material different from the first solid electrolyte membrane 12. For example, the second solid electrolyte membrane 14 may be including a proton conductor electrolyte material with proton conductivity higher than the first solid electrolyte membrane 12.

When an electrolyte layer of the membrane electrode assembly 30 is formed by combining the first solid electrolyte membrane 12 and the second solid electrolyte membrane 14 with higher proton conductivity than the first solid electrolyte membrane 12, such an electrolyte layer can enhance proton conductivity compared with an electrolyte layer that is including the first solid electrolyte membrane 12 alone, provided that the thickness of these electrolyte layers are the same. Moreover, to achieve better proton conductivity, the first solid electrolyte membrane with lower proton conductivity may be thinned as much as possible. Even if the first solid electrolyte membrane 12 is thinned to the extent that gas tightness cannot be maintained, the second solid electrolyte membrane 14 can compensate for gas tightness.

When the electrochemical device is a solid fuel cell, for example, power can be generated in the membrane electrode assembly 30 composed of the first electrode 11, the first solid electrolyte membrane 12, and the second solid electrolyte membrane 14 by supplying a hydrogen-containing gas to the side of the first electrode 11 and by supplying an oxidant gas to the side of the first solid electrolyte membrane 12.

By combining the membrane electrode assembly 20 according to Modification 1 and the membrane electrode assembly 30 according to Modification 2, the configuration of the membrane electrode assembly 10 according to Embodiment 1 may be changed to a four-layer structure in which the electrode is including the first electrode 11 and the second electrode 13, and the electrolyte layer is including the first solid electrolyte membrane 12 and the second solid electrolyte membrane 14.

Embodiment 2

Next, a fuel cell of Embodiment 2 of the present disclosure will be described with reference to Fig. 4 as an exemplary electrochemical device using any one of the membrane electrode assemblies 10, 20, and 30 of Embodiment 1, and Modification 1 and Modification 2 of Embodiment 1, respectively. Fig. 4 is a block diagram schematically illustrating an exemplary core configuration of a fuel cell 100 according to Embodiment 2.

For convenience of description, Embodiment 2 will be described by using the fuel cell 100 that includes the membrane electrode assembly 10 as an exemplary electrochemical device. The fuel cell 100, however, is not limited to this. For example, the fuel cell 100 may include the membrane electrode assembly 20 or the membrane electrode assembly 30 in place of the membrane electrode assembly 10.

As illustrated in Fig. 4, the fuel cell 100 includes a planar single cell 40 including a first solid electrolyte membrane 12, an air electrode 15 to which an oxidant gas is supplied, and a first electrode 11 (i.e., fuel electrode) to which a hydrogen-containing gas as a fuel gas is supplied. Further, the fuel cell 100 includes a fuel gas supply channel 21, which is a channel for supplying a fuel gas to the first electrode 11, and an oxidant gas supply channel 22, which is a channel for supplying an oxidant gas to the air electrode 15.

As illustrated in Fig. 4, the first solid electrolyte membrane 12 is in contact with the first electrode 11 on a first side and in contact with the air electrode 15 on a second side opposite to the first side. The first electrode 11, the first solid electrolyte membrane 12, and the air electrode 15 are stacked in this order.

In the fuel cell 100, a plurality of single cells 40 are formed into a stack 50. Configuration of Single Cell

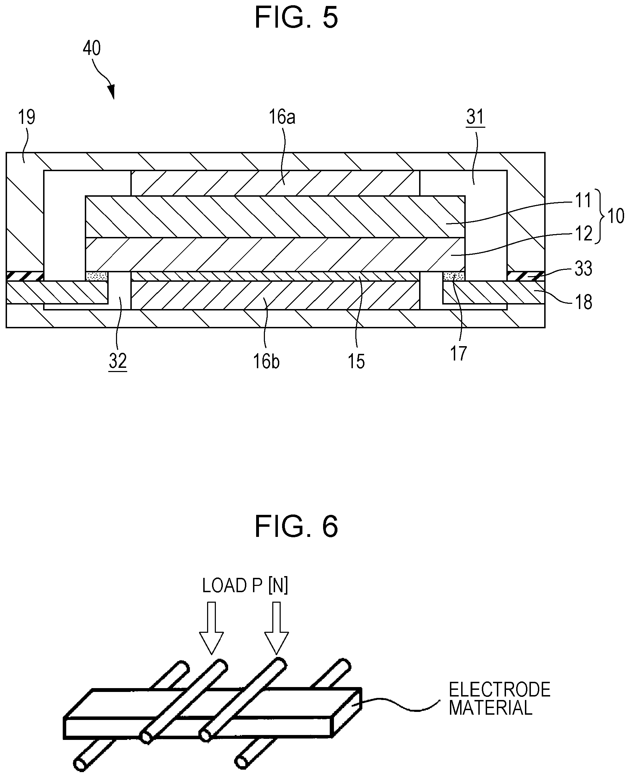

Here, the detailed configuration of the above-mentioned single cell 40 will be described with reference to Fig. 5. Fig. 5 is a cross-sectional view schematically illustrating an exemplary configuration of the single cell 40 included in the fuel cell 100 according to Embodiment 2.

As illustrated in Fig. 5, the single cell 40 includes a membrane electrode assembly 10 having a first electrode 11 and a first solid electrolyte membrane 12, an air electrode 15, a fuel electrode current collector 16a, an air electrode current collector 16b, a separator 18, a seal 17 for bonding the first solid electrolyte membrane 12 and the separator 18, an interconnector 19, and an insulating layer 33. The air electrode 15 is arranged in contact with the first solid electrolyte membrane 12 of the membrane electrode assembly 10.

Power is generated by supplying a hydrogen-containing gas to the first electrode 11 through a fuel gas supply channel 21 and by supplying an oxidant gas to the air electrode 15 through an oxidant gas supply channel 22.

As illustrated in Fig. 5, the separator 18 is provided in the single cell 40 to separate an oxidant gas supplied to the air electrode 15 and a fuel gas supplied to the first electrode 11.

The air electrode 15 is formed by using an oxide ion and electron mixed conductor material that is at least one compound selected from the group consisting of lanthanum strontium cobalt complex oxide, lanthanum strontium cobalt iron complex oxide, lanthanum strontium iron complex oxide, and lanthanum nickel iron complex oxide. When the air electrode 15 is used as a cathode of a solid oxide fuel cell, for example, reactions for electrochemically reducing oxygen in a gas phase occur. For this purpose, the air electrode 15 may be a porous body to ensure a diffusion path of oxygen and to promote reactions.

The fuel electrode current collector 16a and the air electrode current collector 16b are members for extracting current outside from the single cell 40 and are including a ferritic alloy, for example. Such a ferritic alloy may be used after surface-coated with a spinel oxide of $(Mn,Co)_3O_4$ to prevent scattering of Cr. The fuel electrode current collector 16a and the air electrode current collector 16b are arranged to be pressed against the electrodes (i.e., first electrode 11 and air electrode 15) under a predetermined load to decrease contact resistance. Here, to prevent an excessive load applied to the planar single cell 40, the fuel electrode current collector 16a and the air electrode current collector 16b may be including a soft material, such as a porous mesh. Moreover, the fuel electrode current collector 16a and the air electrode current collector 16b may be configured to be pressed against the first electrode 11 and the air electrode 15, respectively, by a stretchable spring-type mechanism, for example. When the fuel electrode current collector 16a and the air electrode current collector 16b are configured as above, it is possible to decrease a local load applied to the planar single cell 40 while ensuring current collecting performance.

The separator 18 is a partition sheet for preventing mixing of a fuel gas supplied to the first electrode 11 (i.e., fuel electrode) and an oxidant gas supplied to the air electrode 15. To prevent internal leakage, the separator 18 may be including a metal composition with $Al_2O_3$ coating on a surface. Examples of such a metal composition include Al-containing ferritic stainless steel. The separator 18 may be formed as a frame shape, for example, and the inner circumferential portion is arranged to face the peripheral portion of the first solid electrolyte membrane 12 and the side on which the air electrode 15 is arranged, as illustrated in Fig. 5. The separator 18 is joined with the opposing peripheral portion of the first solid electrolyte membrane 12 via the seal 17.

The single cell 40 may be divided by the separator 18 into: an oxidant gas circulation region 32 for circulating an oxidant gas, which faces the air electrode 15 and is connected to the oxidant gas supply channel 22; and a fuel gas circulation region 31 for circulating a fuel gas, which faces the first electrode 11 (i.e., fuel electrode) and is connected to the fuel gas supply channel 21. As described above, the single cell 40 can prevent gas leakage from either electrode side to the other electrode side by including the separator 18.

The interconnector 19 ensures electric conduction between stacked single cells 40 and prevents mixing of reaction gases between the single cells 40. One interconnector 19 is arranged between neighboring single cells 40, and neighboring single cells 40 are configured to share one interconnector 19. The interconnector 19 may be an electrically conductive member and including ferritic stainless steel, for example.

The insulating layer 33 for electric insulation is arranged between the interconnector 19 and the separator 18. The insulating layer 33 may be mica, for example.

Examples

Manufacture of Membrane Electrode Assembly for Evaluation

Hereinafter, a manufacturing method for membrane electrode assemblies for evaluation in the working examples of the present disclosure will be described. Here, mechanical properties were evaluated for each membrane electrode assembly manufactured by using an electrode material with a Ni to BZYb volume ratio of 46:54 as a Comparative Example, an electrode material with a Ni to BZYb volume ratio of 57:43 as Example A, an electrode material with the volume ratio of 69:31 as Example B, and an electrode material with the volume ratio of 84:16 as Example C.

First, a green sheet for forming an electrode layer is prepared. The green sheet is prepared: by mixing NiO powders (from Sumitomo Metal Mining Co., Ltd.), proton-conducting electrolyte powders that form an electrolyte layer, a first resin as a binder for the electrolyte powders, a first plasticizer for plasticizing the first resin, and a solvent for dissolving the first resin; and by forming the resulting mixture into a sheet.

Here, a proton conductor material that forms an electrolyte layer was prepared by the citrate method using starting materials of $Ba(NO_3)_2$ (from Kanto Chemical Co., Inc.) and $ZrO(NO_3)_2 \cdot 2H_2O$ (from Kanto Chemical Co., Inc.) powders added with $Yb(NO_3)_3 \cdot xH_2O$ (from Kojundo Chemical Laboratory Co., Ltd.) powders. The respective powders weighed in predetermined proportions were dissolved in distilled water and stirred. To the solution, 1.5 equivalents of citric acid monohydrate (from Kanto Chemical Co., Inc.) and 1.5 equivalents of ethylenediaminetetraacetic acid (EDTA) (from Kanto Chemical Co., Inc.) relative to the metal cations were added. The solution was then stirred at 90°C.

Subsequently, the solution was adjusted to pH 7 by using ammonia water (28%) (from Kanto Chemical Co., Inc.). After pH adjustment, solvent was removed from the solution at 95°C to 240°C by using a hot stirrer. The obtained solid was pulverized in a mortar, followed by degreasing at about 400°C.

The resulting powders after degreasing were press-formed into cylindrical shapes and calcined at 900°C for 10 hours. Coarsely pulverized powders after calcination were fed to a plastic container together with zirconia balls and pulverized with added ethanol by a ball mill for four days or more. After pulverization by the ball mill, solvent was removed by lamp drying.

The obtained electrolyte material powders ($BaZr_{0.8}Yb_{0.2}O_3$, hereinafter referred to as "BZYb") and NiO powders (from Sumitomo Metal Mining Co., Ltd.) were each weighed at a NiO:BZYb weight ratio of 60:40, 70:30, 80:20, or 90:10. For preparation of green sheets, the electrolyte powders, NiO powders, polyvinyl butyral as a resin, butyl benzyl phthalate as a plasticizer, and butyl acetate and 1-butanol as solvents were mixed. The obtained green sheets were stacked by hot pressing at 80°C and 13 MPa, followed by hot pressing at 50 MPa to yield a layered body. A membrane electrode assembly was prepared by firing the obtained layered body at 1,400°C for 2 hours.

Examples A to C and a Comparative Example were evaluated for mechanical properties by four-point bending test. For four-point bending test, a sample was processed to have, as a size, a length of 26 mm, a width of 6 mm, a thickness of 2 mm, and a surface roughness of 0.20 μm Ra and chamfers of 0.1 mm to 0.3 mm in accordance with JIS R 1601 (testing method for flexural strength of fine ceramics). Subsequently, the sample was subjected to reduction processing to obtain a sample for mechanical properties evaluation. Measurement of Stress-Strain Curves for Fuel Electrodes

Next, stress-strain curves were measured for Examples A to C and a Comparative Example as follows. The measurement was performed by using an Instron 5965 universal testing machine at a high operating temperature in a hydrogen gas operating atmosphere.

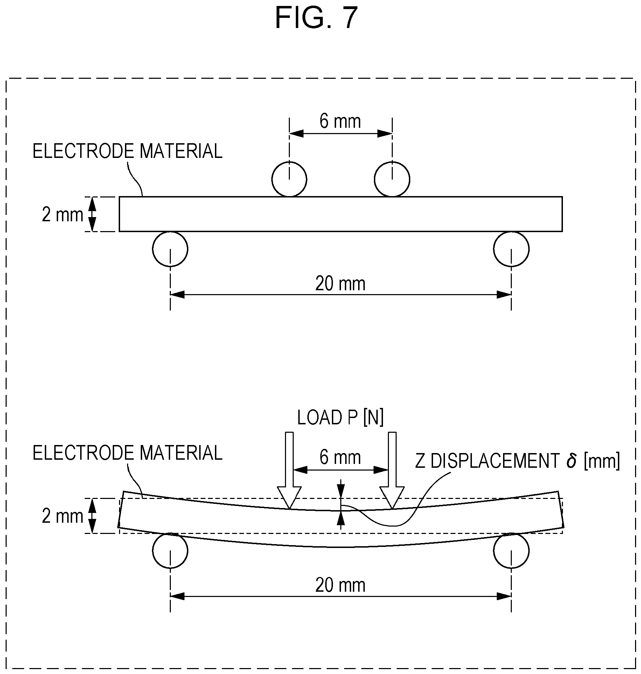

Specifically, a stress-strain curve was measured under conditions of a temperature of 600°C and a reducing atmosphere of 1%$H_2$-99%Ar for an electrode material with each volume ratio of Ni and BZYb that form an electrode. In other words, the measurement was performed in accordance with the testing method for flexural strength of fine ceramics in JIS R 1601, as illustrated in Figs. 6 and 7. Fig. 6 is a perspective view schematically illustrating a measurement method for mechanical properties evaluation of an electrode material according to a working example. Fig. 7 is a cross-sectional view schematically illustrating the measurement method for mechanical properties evaluation of the electrode material according to the working example.

Three-point bending is widely employed in flexural strength evaluation for metal or resin materials. Meanwhile, four-point bending with a fewer measurement variations is adopted for a system containing brittle bodies, such as ceramics. For the working examples of the present disclosure as well, stress-strain curves were obtained by four-point bending.

The measurement for mechanical properties evaluation was performed to confirm a relationship between changes in Ni volume ratio and changes in the amount of strain of an electrode material and to obtain a Ni volume ratio required to planarize the electrode material.

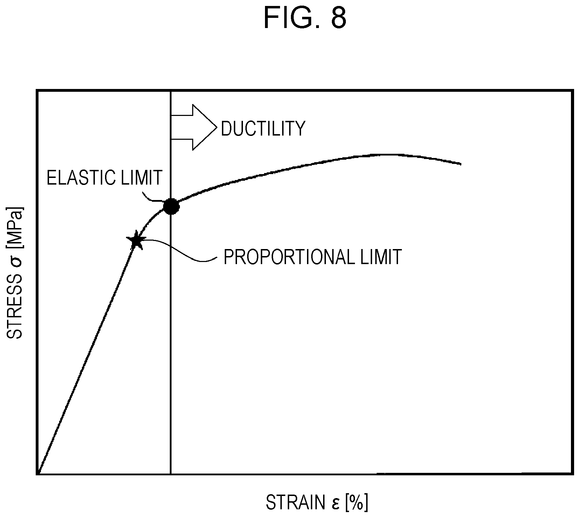

Here, the ductility of an electrode material will be described. Ductility is a property of being elongated without rupture under stress that exceeds the elastic limit. The elastic limit refers to a limit of stress at which an electrode material deformed under a load returns to its original shape when the load is removed. Specifically, as illustrated in Fig. 8, the elastic limit is present at a nonlinearly changing position slightly exceeding the maximum stress value (i.e., proportional limit) in which stress and strain are in a proportional relationship. With the elastic limit as a boundary, the graph is classified into an elastic region and a ductile region. Fig. 8 is a graph showing an exemplary stress-strain curve of the working example. In the graph of Fig. 8, the vertical axis represents stress $\sigma$ [MPa] corresponding to a load P applied to an electrode material, and the horizontal axis represents strain $\varepsilon$ [%] of the electrode material.

In the working examples, the extent of elongation for a material is defined, for convenience, as the amount of strain from the proportional limit, which is a value close to the elastic limit and is more easily identified, to the point of rupture.

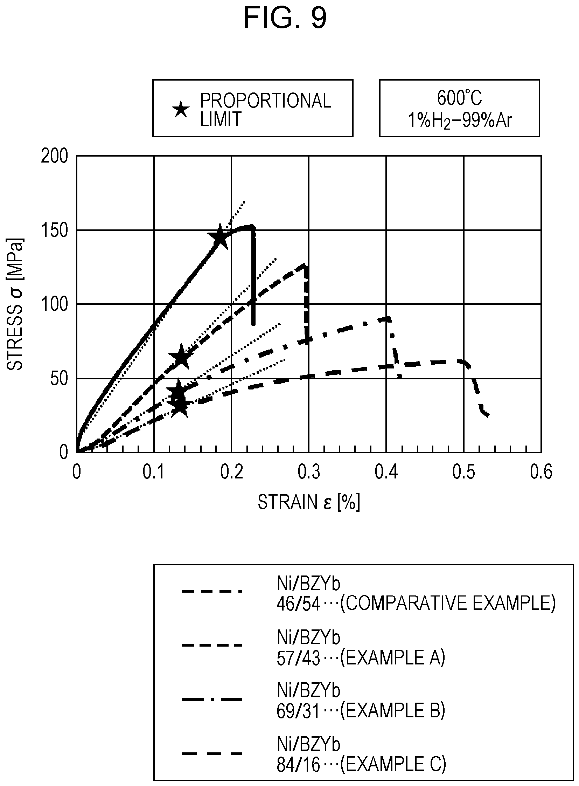

Stress-strain curves were obtained according to the above-described conditions for the respective electrode materials with different Ni volume ratios. The obtained results were shown in Fig. 9. Fig. 9 is a graph showing stress-strain curves for electrode materials according to the Examples and the Comparative Example. Fig. 9 shows stress-strain curves in a reducing atmosphere for the respective electrode materials with different Ni volume ratios. In Fig. 9, the vertical axis represents stress $\sigma$ [MPa] and the horizontal axis represents strain $\varepsilon$ [%].

As shown in Fig. 9, the proportional limits (star marks in Fig. 9) are present at a position with a strain of 0.18% for a case of a Ni volume ratio of 46% and are present at positions with a strain of about 0.13% for all the cases of Ni volume ratios of 57%, 69%, and 84%. In addition, it was found that the amount of strain from the proportional limit to the fracture strain tends to increase from 0.05%, 0.16%, 0.27%, and to 0.36% as a Ni volume ratio increases from 46%, 57%, 69%, and to 84%. In other words, it was found that ductile properties are exhibited further prominently by increasing a Ni volume ratio.

Now, thermal stress as a factor in breakage will be considered. First, planar cells using electrode materials having the four compositions of the above-mentioned Examples A to C and the Comparative Example will be considered. In these cells, since a linear expansion coefficient increases as a metal volume ratio increases, breakage is considered to readily occur due to increased thermal stress and strain arising at an interface between the electrolyte layer (first solid electrolyte membrane 12, for example) and the electrode (first electrode 11, for example). Here, interfacial strain can be calculated by (difference in linear expansion coefficient) × (temperature).

As shown in Table 1, differences between the linear expansion coefficients of the electrode materials with Ni volume ratios of 46%, 57%, 69%, and 84% and the linear expansion coefficient of the electrolyte layer are 3.3 × 10⁻⁶/°C, 4.0 × 10⁻⁶/°C, 4.6 × 10⁻⁶/°C, and 5.4 × 10⁻⁶/°C, respectively. Here, if the operating temperature is assumed to be 600°C, the respective interfacial strains are calculated as 0.2%, 0.24%, 0.28%, and 0.32%.

[Table 1]

| Volume ratio vol% Ni/BZYb | Difference in thermal expansion coefficient × 10⁻⁶/°C | Interfacial strain % Thermal stress MPa |
|---|---|---|
| 46/54 (Comparative Example) | 3.3 | 0.20% 150 MPa |
| 57/43 (Example A) | 4.0 | 0.24% 105 MPa |
| 69/31 (Example B) | 4.6 | 0.28% 75 MPa |
| 84/16 (Example C) | 5.4 | 0.32% 52 MPa |

Table 1 shows values of thermal stress arising at an interface in the membrane electrode assemblies of the working examples. More specifically, Table 1 shows the corresponding difference in linear expansion coefficient from the electrolyte layer, interfacial strain (%), and thermal stress (MPa) for the electrode materials with Ni volume ratios of 46%, 57%, 69%, and 84%.

From Fig. 9 and Table 1, it was found that the Comparative Example, Example A, Example B, and Example C, despite increasing differences in linear expansion coefficient in this order, have decreasing thermal stresses of 150 MPa, 105 MPa, 75 MPa, and 52 MPa, respectively, as observed from the stress-strain curves due to the effect of ductile properties.

Calculation of Amount of Deflection

Next, to investigate the effect of local stress that arises due to warpage of a planar cell, the amount of deformable deflection was calculated for planar cells that use electrode materials each having a Ni volume ratio of any of the above-mentioned four compositional ratios. Specifically, the amount of deflection was calculated by employing multilinear isotropic hardening of a finite element model to adopt plastic deformation into analysis.

Multilinear approximation was performed for ductile behavior of the stress-strain curves obtained by four-point bending measurement, and the amount of deflection and stress were calculated when forced displacement was applied to disk planar cells. The disk planar cells had the shape of a diameter of 20 mmφ and a thickness of 500 μm. General formulae used for analysis are shown below.

$$\sigma = \frac{P}{t^2}\{0.477 + (1 + v)(0.485ln\frac{R}{t} + 0.52)\} \qquad \cdots (1)$$

$$w = \frac{(3+v)R^2P}{16\pi(1+v)D} \qquad \cdots (2)$$

$$D = \frac{Et^3}{12(1-v^2)} \qquad \cdots (3)$$

In Formulae 1 to 3, σ is a maximum stress at the center of a planar cell, w is a maximum deflection of a planar cell, P is a load applied to a planar cell, t is a disk thickness of a planar cell, R is a disk radius of a planar cell, v is a Poisson's ratio, and E is a modulus of longitudinal elasticity.

The amount of deflection is calculated when a forced load P is applied to a planar cell. Since a fracture strain is known for the above-mentioned each compositional ratio from the stress-strain curve, the amount of deformable deflection can be estimated. As a result, the amount of deflection for each Comparative Example, Example A, Example B, and Example C is specifically a value shown in Table 2.

[Table 2]

| Volume ratio vol% Ni/BZYb | Planar cell warpage ratio % ΔL/L | Maximum deflection ratio % Amount of maximum deflection/disk diameter | |
|---|---|---|---|
| 46/54 (Comparative Example) | 0.47% | 0.42% | Planarization impossible Breakage before becoming flat |
| 57/43 (Example A) | 0.51% | 0.63% | Planarization possible |
| 69/31 (Example B) | 0.54% | 0.75% | Planarization possible |
| 84/16 (Example C) | 0.58% | 0.88% | Planarization possible |

Table 2 shows values of actual warpage ratios (%) of the planar cells in the working examples and maximum deflection ratios (%) obtained through calculation. Table 2 shows the corresponding warpage ratio (%) of a planar cell, maximum deflection ratio (%), and feasibility of planarization for the planar cells (the planar cell of the Comparative Example and the planar cells of Examples A to C) each including an electrode material with a Ni volume ratio of 46%, 57%, 69%, or 84%.

Here, the warpage ratio of a planar cell is defined as a ΔL/L value, in which ΔL is an in-plane difference in height in the thickness direction of the planar cell (i.e., the amount of warpage of the planar cell) and L is a size in the longitudinal direction of the planar cell (i.e., diameter). The warpage ratio represents a ratio at which the planar cell deforms in a direction that decreases warpage. As shown in Table 2, the warpage ratio of a planar cell is found to increase as the metal volume ratio increases. This is because a difference in linear expansion coefficient between the electrode and the electrolyte layer increases as more metal is contained in the electrode.

Moreover, Table 2 shows values of maximum deflection ratios obtained through calculation. The maximum deflection ratio represents the amount of maximum deflection relative to the size in the longitudinal direction of a planar cell. When the maximum deflection ratio is larger than the warpage ratio of a planar cell, the planar cell can deform to become flat in the operating environment of a high temperature, a reducing atmosphere, and a fastened state. For example, in the planar cell of the Comparative Example with a Ni volume ratio of 46%, a warpage ratio of the planar cell is 0.47% and a maximum deflection ratio is 0.42%. When a planar cell having such mechanical properties deforms at a warpage of 0.42%, the tensile stress in the lower portion of the electrode material reaches the rupture stress. Consequently, the electrode material cannot deform further to become flat and breakage results. Accordingly, the planar cell of the Comparative Example in which the electrode material has a Ni volume ratio of 46% is predicted to break in the operating environment.

Meanwhile, as shown in Table 2, in each planar cell of Examples A to C that satisfies the conditions that a Ni volume ratio is 57% or more and a warpage ratio of the planar cell is 0.5% or more, the maximum deflection ratio that results in breakage is larger than the warpage ratio of the planar cell.

For this reason, the electrode materials included in the planar cells of Examples A to C are considered to have ductility that enables planarization. Accordingly, by using the electrode materials included in the planar cells of Examples A to C for a fuel electrode of a fuel cell, for example, breakage of a planar cell can be suppressed in the operating environment of the fuel cell. Evaluation of Breakage

Next, the planar cells of the working examples were evaluated for breakage in the operating environment. The shape of each planar cell was a disk having a thickness of 500 μm for a fuel electrode on an anode support, a thickness of 10 μm for an electrolyte layer, and a size (i.e., diameter) of φ20 mm. The planar cells each having the warpage ratio value shown in Table 2 were evaluated.

Specifically, a planar cell according to the Comparative Example including the electrode material with a Ni volume ratio of 46% as a fuel electrode, a planar cell according to Example A including the electrode material with a Ni volume ratio of 57% as a fuel electrode, and a planar cell according to the Example B including the electrode material with a Ni volume ratio of 69% as a fuel electrode were prepared. Electromotive force during reduction processing at a temperature of 600°C was measured for the planar cell of the Comparative Example and for the planar cells of Example A and Example B. On this occasion, if a planar cell breaks, a measured electromotive force value suddenly falls. Accordingly, by measuring electromotive force for each planar cell of the Comparative Example, Example A, and Example B, the occurrence rate of planar cell breakage (i.e., failure rate) is obtained.

[Table 3]

| Volume ratio vol% Ni/BZYb | Failure rate % |
|---|---|
| 46/54 (Comparative Example) | 85% (17/20) |

(continued)

| Volume ratio vol% Ni/BZYb | Failure rate % |
|---|---|
| 57/43 (Example A) | 0% (0/2) |
| 69/31 (Example B) | 7% (1/14) |

Table 3 shows the values of the failure rates for planar cells of the Comparative Example and Examples. In the planar cell of the Comparative Example (a Ni volume ratio of 46% in the electrode), the failure rate was 85% (17/20). In contrast, significant improvements in failure rate are observed; a failure rate of 0% (0/2) for the planar cell of Example A (Ni volume ratio of 57% in the electrode) and a failure rate of 7% (1/14) for the planar cell of Example B (Ni volume ratio of 69% in the electrode).

As in the foregoing, it is confirmed that breakage of planar cells can be suppressed significantly due to the ductility effect of electrodes obtained by increasing a Ni volume ratio.

The working examples are described with Ni as an exemplary metal contained in the electrode. Meanwhile, the respective melting points of Ni, Co, Fe, and Pd are close to each other. Accordingly, even if an electrode contains at least any one of Co, Fe, and Pd in place of Ni in a volume ratio of 57% or more, it is possible to obtain the above-described mechanical properties evaluation similar to that for a Ni-containing electrode and thus to decrease the occurrence of breakage and cracking.

A membrane electrode assembly according to the present disclosure can be used as a membrane electrode assembly of an electrochemical device, such as a fuel cell, a gas sensor, a hydrogen pump, or a water electrolyzer.

## Claims

1. A membrane electrode assembly comprising:

   an electrode (11) including a composite material containing a metal and a proton-conducting first electrolyte; and
   an electrolyte layer (12) including a proton-conducting second electrolyte, the electrode (11) and the electrolyte layer (12) being stacked,
   wherein a volume ratio of the metal in the electrode (11) is 57% or more,
   **characterized in that** wherein each of the first electrolyte and the second electrolyte is represented by any one compositional formula of $Ba_aZr_{1-x}M_xO_3$, $Ba_aCe_{1-x}M_xO_3$, and $Ba_aZr_{1-x-y}Ce_xM_yO_3$, wherein M is at least one element selected from the group consisting of Sc, Lu, Yb, and Tm; $0 < x < 1$; $0 < y < 1$; $0.95 \leq a \leq 1.05$.

2. The membrane electrode assembly according to Claim 1, wherein when an amount of warpage is defined as $\Delta L/L$ in which $\Delta L$ is an in-plane difference in height in a thickness direction and L is a size in a longitudinal direction of a membrane electrode assembly after sintering, the electrode (11) deforms at a $\Delta L/L$ of 0.5% or more in a direction that decreases warpage.

3. The membrane electrode assembly according to Claim 1, wherein the volume ratio of the metal in the electrode (11) is 69% or more and 84% or less.

4. The membrane electrode assembly according to Claim 1, wherein the metal includes at least one metal selected from the group consisting of Ni, Co, Fe, and Pd.

5. The membrane electrode assembly according to Claim 1, wherein a porosity of the electrode (11) is 20% or more and 50% or less.

6. The membrane electrode assembly according to Claim 1, wherein each of the first electrolyte and the second electrolyte is represented by $Ba_aZr_{1-x}M_xO_3$.

7. The membrane electrode assembly according to Claim 1, wherein a thickness of the electrode (11) is larger than a thickness of the electrolyte layer (12).

8. The membrane electrode assembly according to Claim 1, further comprising a functional layer (13) that is provided between the electrode (11) and the electrolyte layer (12) to come into contact with the electrolyte layer (12), wherein the functional layer (13) is selected from an electrode layer that can increase the triple phase boundary and/or an electrode layer with an enhanced porosity, relative to the electrode (11) at an interface with the electrolyte layer (12).

9. A fuel cell comprising:

   a membrane electrode assembly (10) according to claim 1;
   an air electrode (15) to which an oxidant gas is supplied;
   a fuel gas supply channel (21) which supplies a hydrogen-containing gas as a fuel gas to the electrode (11); and
   an oxidant gas supply channel (22) which supplies the oxidant gas to the air electrode (15), wherein:
   the electrolyte layer (12) is in contact with the electrode (11) on a first side and in contact with the air electrode (15) on a second side opposite to the first side; and the electrode (11), the electrolyte layer (12), and the air electrode (15) are stacked in this order.

**Patentansprüche**

1. Membran-Elektroden-Einheit, die umfasst:

   eine Elektrode (11), die ein Verbundmaterial enthält, das ein Metall und einen protonenleitenden ersten Elektrolyt einschließt; sowie
   eine Elektrolytschicht (12), die einen protonenleitenden zweiten Elektrolyt enthält, wobei die Elektrode (11) und die Elektrolytschicht (12) übereinandergeschichtet sind,
   und ein Volumenanteil des Metalls in der Elektrode (11) 57 % oder mehr beträgt,
   **dadurch gekennzeichnet, dass** sowohl der erste Elektrolyt als auch der zweite Elektrolyt durch eine beliebige Zusammensetzungsformel von $Ba_aZr_{1-x}M_xO_3$, $Ba_aCe_{1-x}M_xO_3$ and $Ba_aZr_{1-x-y}Ce_xM_yO_3$ dargestellt wird, wobei M wenigstens ein Element ist, das aus der Gruppe ausgewählt wird, die aus Sc, Lu, Yb sowie Tm besteht, und $0 < x < 1$; $0 < y < 1$; $0,95 \leq a \leq 1,05$ gilt.

2. Membran-Elektroden-Einheit nach Anspruch 1, wobei, wenn ein Betrag an Verformung als $\Delta L/L$ definiert ist, wobei $\Delta L$ eine Höhendifferenz in einer Ebene in einer Dickenrichtung ist und L eine Größe einer Membran-Elektroden-Einheit in einer Längsrichtung nach Sintern ist, sich die Elektrode (11) um einen Betrag $\Delta L/L$ von 0,5 % oder mehr in einer Richtung verformt, in der sich Verformung verringert.

3. Membran-Elektroden-Einheit nach Anspruch 1, wobei der Volumenanteil des Metalls in der Elektrode (11) 69 % oder mehr und 84 % oder weniger beträgt.

4. Membran-Elektroden-Einheit nach Anspruch 1, wobei das Metall wenigstens ein Metall umfasst, das aus der Gruppe ausgewählt wird, die aus Ni, Co, Fe und Pd besteht.

5. Membran-Elektroden-Einheit nach Anspruch 1, wobei eine Porosität der Elektrode (11) 20 % oder mehr und 50 % oder weniger beträgt.

6. Membran-Elektroden-Einheit nach Anspruch 1, wobei sowohl der erste Elektrolyt als auch der zweite Elektrolyt durch $Ba_aZr_{1-x}M_xO_3$ dargestellt wird.

7. Membran-Elektroden-Einheit nach Anspruch 1, wobei eine Dicke der Elektrode (11) größer ist als eine Dicke der Elektrolytschicht (12).

8. Membran-Elektroden-Einheit nach Anspruch 1, die des Weiteren eine funktionale Schicht (13) umfasst, die zwischen der Elektrode (11) und der Elektrolytschicht (12) so angeordnet ist, dass sie in Kontakt mit der Elektrolytschicht (12) kommt, wobei die funktionale Schicht (13) aus einer Elektrodenschicht, die die Dreiphasengrenze vergrößern kann, und/oder einer Elektrodenschicht mit einer erhöhten Porosität relativ zu der Elektrode (11) an einer Grenzfläche mit der Elektrolytschicht (12) ausgewählt wird.

9. Brennstoffzelle, die umfasst:

   eine Membran-Elektroden-Einheit (10) nach Anspruch 1;
   eine Luftelektrode (15), der ein Oxidant-Gas zugeführt wird;

einen Zuführkanal (21) für Brennstoff-Gas, der der Elektrode (11) ein wasserstoffhaltiges Gas als ein Brennstoff-Gas zuführt; und
einen Zuführkanal (22) für Oxidant-Gas, der der Luftelektrode (15) das Oxidant-Gas zuführt, wobei:

die Elektrolytschicht (12) an einer ersten Seite in Kontakt mit der Elektrode (11) ist und an einer der ersten Seite gegenüberliegenden zweiten Seite in Kontakt mit der Luftelektrode (15) ist; und
die Elektrode (11), die Elektrolytschicht (12) und die Luftelektrode (15) in dieser Reihenfolge übereinandergeschichtet sind.

## Revendications

1. Assemblage d'électrode à membrane comprenant :

une électrode (11) comprenant un matériau composite contenant un métal et un premier électrolyte conduisant les protons ; et
une couche d'électrolyte (12) comprenant un deuxième électrolyte conduisant les protons, l'électrode (11) et la couche d'électrolyte (12) étant empilées,
dans lequel un ratio volumique du métal dans l'électrode (11) est supérieur ou égal à 57 %,
**caractérisé en ce que** chacun des premier et deuxième électrolytes est représenté par une formule de composition quelconque parmi $Ba_aZr_{1-x}M_xO_3$, $Ba_aCe_{1-x}M_xO_3$ et $Ba_aZr_{1-x-y}Ce_xM_yO_3$, dans lequel M est au moins un élément sélectionné parmi le groupe constitué par Sc, Lu, Yb et Tm ; $0 < x < 1$ ; $0 < y < 1$ ; $0,95 \leq a \leq 1,05$.

2. Assemblage d'électrode à membrane selon la revendication 1, dans lequel, quand une quantité de gauchissement est définie comme étant $\Delta L/L$, où $\Delta L$ est une différence de hauteur dans le plan en direction de l'épaisseur et L est la taille en direction longitudinale d'un assemblage d'électrode à membrane après frittage, l'électrode (11) se déforme avec un gauchissement $\Delta L/L$ supérieur ou égal à 0,5 % dans une direction qui réduit le gauchissement.

3. Assemblage d'électrode à membrane selon la revendication 1, dans lequel le ratio volumique du métal dans l'électrode (11) est supérieur ou égal à 69 % et inférieur ou égal à 84 %.

4. Assemblage d'électrode à membrane selon la revendication 1, dans lequel le métal comprend au moins un métal sélectionné parmi le groupe constitué par Ni, Co, Fe et Pd.

5. Assemblage d'électrode à membrane selon la revendication 1, dans lequel la porosité de l'électrode (11) est supérieure ou égale à 20 % et inférieure ou égale à 50 %.

6. Assemblage d'électrode à membrane selon la revendication 1, dans lequel chaque électrolyte parmi le premier électrolyte et le deuxième électrolyte est représenté par $Ba_aZr_{1-x}M_xO_3$.

7. Assemblage d'électrode à membrane selon la revendication 1, dans lequel l'épaisseur de l'électrode (11) est supérieure à l'épaisseur de la couche d'électrolyte (12).

8. Assemblage d'électrode à membrane selon la revendication 1, comprenant en outre une couche fonctionnelle (13) qui est pourvue entre l'électrode (11) et la couche d'électrolyte (12) pour venir en contact avec la couche d'électrolyte (12), dans lequel la couche fonctionnelle (13) est sélectionnée parmi une couche d'électrode qui peut augmenter le point triple et/ou une couche d'électrode à porosité accrue, par rapport à l'électrode (11) à une interface avec la couche d'électrolyte (12).

9. Pile à combustible comprenant :

un assemblage d'électrode à membrane (10) selon la revendication 1 ;
une électrode à air (15) à laquelle est alimenté un gaz oxydant ;
un canal d'alimentation de gaz combustible (21) qui alimente un gaz contenant de l'hydrogène comme gaz combustible à l'électrode (11) ; et
un canal d'alimentation de gaz oxydant (22) qui alimente le gaz oxydant à l'électrode à air (15), dans laquelle :
la couche d'électrolyte (12) est en contact avec l'électrode (11) sur un premier côté et est en contact avec l'électrode à air (15) sur un deuxième côté opposé au premier côté ; et l'électrode (11), la couche d'électrolyte (12) et l'électrode à air (15) sont empilées dans cet ordre.

# FIG. 1

```
                                                    11 ⎫
                                                       ⎬ 10
                                                    12 ⎭
```

# FIG. 2

```
                                                    11 ⎫
                                                    13 ⎬ 20
                                                    12 ⎭
```

# FIG. 3

```
                                                    11 ⎫
                                                    14 ⎬ 30
                                                    12 ⎭
```

# FIG. 4

100

| STACK | 50 |

| SINGLE CELL | 40 |

⋮

| SINGLE CELL | 40 |

| FIRST ELECTRODE | 11 |

21

| FIRST SOLID ELECTROLYTE MEMBRANE | 12 |

| AIR ELECTRODE | 15 |

22

# FIG. 5

# FIG. 6

LOAD P [N]

ELECTRODE MATERIAL

# FIG. 7

ELECTRODE MATERIAL

6 mm

2 mm

20 mm

LOAD P [N]

ELECTRODE MATERIAL

6 mm

Z DISPLACEMENT $\delta$ [mm]

2 mm

20 mm

# FIG. 8

# FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017014069 A
- US 2019006680 A1
- US 2016204446 A1

**Non-patent literature cited in the description**

- **LEI BI et al.** BaZr0.8Y0.2O3-[delta]-NiO Composite Anodic Powders for Proton-Conducting SOFCs Prepared by a Combustion Method. *JOURNAL OF THE ELECTROCHEMICAL SOCIETY,* 01 January 2011, vol. 158, B797-B803

- **YU-EUN PARK et al.** Pore structure improvement in cermet for anode-supported protonic ceramic fuel cells. *CERAMICS INTERNATIONAL.,* 01 April 2013, vol. 39, 2581-2587